# EUROPEAN PATENT SPECIFICATION

(11) **EP 0 557 656 B1**
(45) Date of publication and mention of the grant of the patent: **27.03.1996**
(21) Application number: 92311685.9
(22) Date of filing: 22.12.1992
(51) Int. Cl.: H01M 4/38, H01M 10/24, H01M 10/30

(54) **Hydrogen storage alloy electrode**
Elektrode aus wasserstoffspeichernder Legierung
Electrode en alliage emmagasinant l'hydrogène

(30) Priority: 28.12.1991 CN 91111747
(43) Date of publication of application: 01.09.1993
(73) Proprietor: NANKAI UNIVERSITY, Nankai Qu,Tianjin,P.R. (CN)
(72) Inventor: Zhang, Yunshi, North Village,NanKai University (CN); Song, Deying, Southwest Village, NanKai University (CN); Chen, Youxiao, Tianjin (CN); Chen, Jun, South West VillageNanKai University (CN); Wang, Genshi, North Village,NanKai University (CN); Yuan, Huatang, Southwest Village,NanKai University (CN); Zhou, Zuoxiang, North Village,NanKai University (CN); Cao, Xuejun, North Village,NanKai University (CN); Zang, Taoshi, North Village,NanKai University (CN); Zhang, Daxin, Southwest Village,NanKai University (CN)
(74) Representative: Barlow, Roy James

(56) References cited:
- EP-A- 0 251 385
- EP-A- 0 277 332
- EP-A- 0 417 697

## Description

### Background of the Invention

This invention relates to a hydrogen storage alloy electrode, particularly to an active material of the hydrogen storage alloy electrode.

The reason of the hydrogen storage intermetallic compound can be used as electrode is that when it is charged and discharged in the water solution, the reversible reaction occurs under the following equation

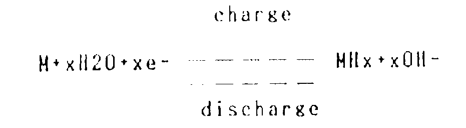

As Matsumoto introduced in "New Type Hydrogen Storage Alloy Batteries, External Rare Earth Information" (1990.3), the hydrogen storage intermetallic compounds having been developed so far are mainly the alloys of MmNi5 system and TiNi system. According to the literature reports which have been searched, the researches of utilizing them as the hydrogen storage alloy electrodes are still limited to how to improve its electrochemical capacity or electrochemical stability by selecting the composition of these hydrogen storage alloys, but up to now there has been no report about industrial mass production and practical application of the sealed alkali battery assembled from the previous hydrogen storage alloy electrode. The reason is due to that the activation of the hydrogen storage alkali battery is designed on the basis of the reaction.

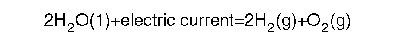

When the battery is in charging, active hydrogen is produced on the hydrogon storage alloy anode and is absorbed in situ, and active oxygen is produced on the nickel oxide cathode and is combined with the nickel oxide to form Ni(III) hydrous oxide; when the battery is discharging, the hydrogen is released from hydrogen storage alloy anode and is combined with the oxygen released from Ni(III cathode to form water; in the mean time, the electric current is produced. The above mentioned reversible process can be expressed as follows:

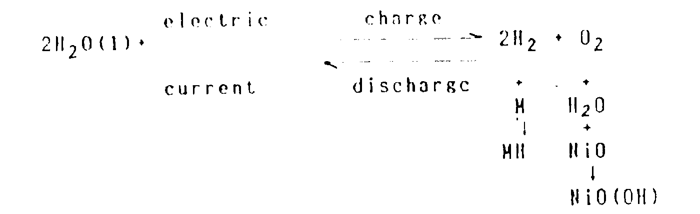

It can be found out from above equation that, in the activation charge-discharge process of the hydrogen storage battery, because of the increasing of H₂ and 0₂, the internal pressure of the battery will be raised inevitably; especially in the later period of charging, the internal pressure is raised obviously, which causes the capacity of the sealed hydrogen storage alkali battery to be 10% lower than the capacity of the open one. In addition, owing to the increasing oxygen production from the cathode, the cycle life of the battery is severely reduced. The battery can be sealed in commercial production only as the internal pressure is lower. Therefore, the question of how to reduce the internal pressure of a hydrogen storage alkali battery has already become the crucial technical problem to be solved before the sealed hydrogen storage alkali battery can be put into industrial production and practical application. JP60-130053(1985) introduced the method of embedding the current collector into the battery to reduce the internal pressure. Although a certain effect is reached, in the case of the battery such as AA type in which internal space is strictly limited, this method is impractical. JP61-216269(1986) introduced a method of increasing the gas passages by drilling some holes in a separator between anode and cathode, but the effect of lowering internal pressure is not ideal. JP62-295353(1987) reported the technique of applying a layer of carbon on the hydrogen storage alloy material and conducting a vacuum heat treatment at a temperature of up to 1050°C, then pulverizing the material and carrying on electrode preparation, but the operation of this technical process is difficult and not easily applied in large scale production. Moreover, the decompression is effect only in 1/3 C₀₁ small current charging JP63-55058(1988) introduced a method of decompression by embedding crystalline fiber. The preparation of the crystalline fiber is not only time consuming but also expensive, so it is not suitable for industrial application. JP63-314777(1988) and Fan. D., in J Electrochem. Soc., 138.1(1991) proposed the scheme of improving the structure design and the charge constitution of the battery. However, the altered structural design is difficult to fit in with industrial production, and the improved charge constitution limits the application scope of the battery. So that all of these are not practical methods.

The objective of this invention is to solve the crucial technical problem about industrial mass production and practical application of the sealed hydrogen storage alloy alkali battery effectively and conveniently, by proceeding from the composition of the hydrogen storage alloy material, improving the characters of the hydrogen storage alloy material in essence, causing it to take effect of catalysis in a charge-discharge process, accelerating the combination process of the accumulated inactive H₂ and 0₂ produced in the later period of activation to turn into H₂0, to reduce essentially the internal pressure of the battery.

Another object of the present invention is to provide a hydrogen storage alloy electrode which can accelerate the combination process to H₂ and 0₂ into H₂0 inside a sealed battery to greatly reduce the internal pressure of the sealed battery.

### Summary of the invention

According to the present invention, a hydrogen storage alloy electrode has an active material which comprises first hydrogen storage alloy M₁ and second hydrogen storage alloy M₂. The two alloys M₁ and M₂ are coated with a Ni. P based metallic compound before the M₁ and M₂ are mixed together. M₁ has a composition of MmNi_{5-x-y-}AxByCz, wherein Mm is a Mischmetal, A-Co, Cr, V; B-Mn, Sn, Be; C=AI, Ca, Mg, Zr, Nb; 0≤x≤0.5, 0≤y≤1.5, 0≤z≤0.5. M₂ is D₂₋ᵤE₁₋ᵥFuGv, wherein D=Mg, Al; E=Cu, Zn; F=Ca, Be; G=Sn, Bi; 0≤u≤1, 0<v<0.5.

### Detailed Description of the Invention

According to the present invention, a hydrogen storage alloy electrode has an active material which comprises first hydrogen storage alloy M₁ and second hydrogen storage alloy M₂ M₁ is MmNi5-x-y-z AxByCz, wherein Mm is the mischmetal, A=Co, Cr, V; B=Mn, Sn, Be; C=AI, Ca, Mg, Zr, Nb; 0≤x≤0.5, o≤y≤1.5, 0≤z≤0.5, M₂ is D2-uE1-vFuGv, wherein D=Mg, Al; E=Cu, Zn; F=Ca, Be G=Sn, Bi; 0≤u≤1, 0≤v≤0.5.

In accordance with the invention, the two alloys M₁ and M₂ are mixed together after M₁ and M₂ have been coated with an Ni, P based metallic compound. The weight ratio of M₁ and M₂ is from about 20:1 to 10: 1.

The Ni, P based metallic compound according to the invention is a Ni, P J metallic compound in which J is an element selected from Cr, W, Co or Sn The atomic percentage of the metallic compound is for Ni:90 to 97%, for P:1 to 7% and for J:0 to 5%, based on total atomic weight of the metallic compound. Preferably the metalic compound is a Ni, P metallic compound in which the atomic percentage of Ni is from 93 to 97%, P is from 3 to 7%.

It is preferred according to the invention that A is Cr, B is Be, C is Nb, 0≤x≤0.5, 0<y<1.5, 0≤z≤0.5, more preferably x is 0.4, y is 1.2, z is 0.4; or A is Co, B is Sn, C is Ca, 0≤x≤0.5; 0≤y≤1.5, 0≤z≤0.5; more preferably x is 0.4, y is 1.2, z is 0.4; or A is Cr, B is Mn, 0≤x≤0.5, 0≤y≤1.5, Z=0; or A is V, B is Sn, C is Zr, 0≤x≤0.5, 0≤y≤1.5, 0≤z≤0.5.

It is also preferred according tothe invention that D is Mg, E is Cu, F is Ca, G is Sn, 0≤u≤1, 0≤v≤0.5, more preferably, u is 0.5, v is 0.5.

In accordance with the invention, the alloy M₁ and the alloy M₂ are pulverized to form alloy powders and then the two alloys are coated with the Ni, P based metallic compound. The average size of the two alloy powders is from about 250 to 600 mesh, preferably about 300 to 400 mesh. By a method of chemical plating, the coating of the Ni, P based metallic compound is formed on the surface of the two alloy powders. M₁ and M₂ are separately coated with a Ni, P based metallic compound. The plating solution for M₁ can be different from the one used for M₂. It is preferred that the same plating solution is used for M₁ and M₂. The thickness of the coating of the metallic compound is from about 1 to 10 µm according to the invention. The chemical plating is a conventional chemical plating method. Before the two alloy powders are treated by the chemical plating, the two alloy powders are immersed for a short period of time, for instance, minutes or more by an alkyl compound such as, dodecyl sodium sulfonate etc.

In accordance with invention, an alkali battery includes a hydrogen storage alloy electrode which incorparates the active material of the invention.

According to the present invention, the hydrogen storage alloy electrode is prepared from the two coated alloy powders M₁ and M₂ by a general technical process of electrode preparation. Typically, a mixture of M₁ and M₂ is made up with a PTFE emulsion of 5-10% by weight based on the total weight of the mixed powders to form a paste. The paste is rolled several times under 60 ~ 100°C to become an alloy powder sheet of 0.2 ~ 0.4mm thickness The sheet is packed under 0.5~2ton/cm² pressure to one side of an electric conductive nickel base to prepare the hydrogen storage alloy electrode.

The hydrogen storage alkali battery assembled with this electrode as anode and nickel oxide as cathode has a low internal pressure, and the capacity of the sealed battery is close to an open battery. Only 3 ~ 5 times of activation are necessary to reach the charge-discharge maximum, so that it can be carried on industrial production and practical application completely. The character of low temperature discharge of this battery is good. Due to the decreasing of the oxygen concentration on the cathode, the cycle life of the battery is prolonged, the battery capacity descends only 6.5% after 320 charge-discharge cycles, the capacity reduction rate of the cycle averages lower than 0.02%.

### Example 1

100g hydrogen storage alloy powder MnNi3.8 Co0.5 Mn0.4 A10.3 and 100g hydrogen storage alloy powder Mg 1.8 Cu 1.0 Al 0.2 were separately immersed in 60g of methylbenzene for 4 minutes. The two powders were then coated seperately with Ni, P metallic compound in a plating solution at 80°C by a chemical plating method. The plating solution used in the method contained 30g of NiCl₂, 40g of NH₄CI, 50g of Na₂P0₂, 30g of sodium citrate, 10ml of ammonia and 1000ml distilled water. The coating of Ni, P metallic compound on the surface of the alloy powder was 3-4 µm.

The coated first alloy powder and second alloy powder were mixed in accordance with the weight proportion of 20: 1. It was made up with PTFE emulsion of 8% by weight based on the weight of the mixed alloy powder to form a paste. The paste was rolled several times under 60°C to become an alloy powder sheet of 0.4mm thickness. The sheet was packed under 1 ton/cm² pressure to one side of an electric conductive nickel base of suitable size on the basis of the battery case dimensions to prepare the hydrogen storage alloy electrode. The alkali battery was assembled with the hydrogen storage alloy electrode as anode, nickel oxide as cathode, 5N KoH solution containing 15% LiOH as electrolyte and nylon nonwoven as separator. After 3 times charge-discharge activation it was sealed up to form a cylinder style AA type alkali battery. The contrast data of electrical capacity and energy density of the open type and the sealed type batteries are listed in Table 1.

### Example 2

The two kinds of hydrogen storage alloy powders adopted in Example 1 were mixed in accordance with the weight proportion of 15:1. The hydrogen storage alloy electrode was prepared by the same technique and assembled to form AA type alkali battery (B), and another electrode was prepared from the hydrogen storage alloy powder with a composition of MmNi3.8 Co0.5 MnO.4 Al0.3alone by the same technique and assembled to form alkali battery (A). The contrrast measure data of internal pressure, discharge capacity and charge efficiency of the alkali battery A and B are listed in Table 2.

### Example 3

The two kinds of hydrogen storage alloy powders adopted in Example 1 were mixed in accordance with the weight proportion of 10:1. The hydrogen storage alloy electrode was prepared by the same technique and assembled to form an AA type alkali battery (C). The contrast data of activation times and discharge capacity of the alkali battery A and C are listed in Table 3.

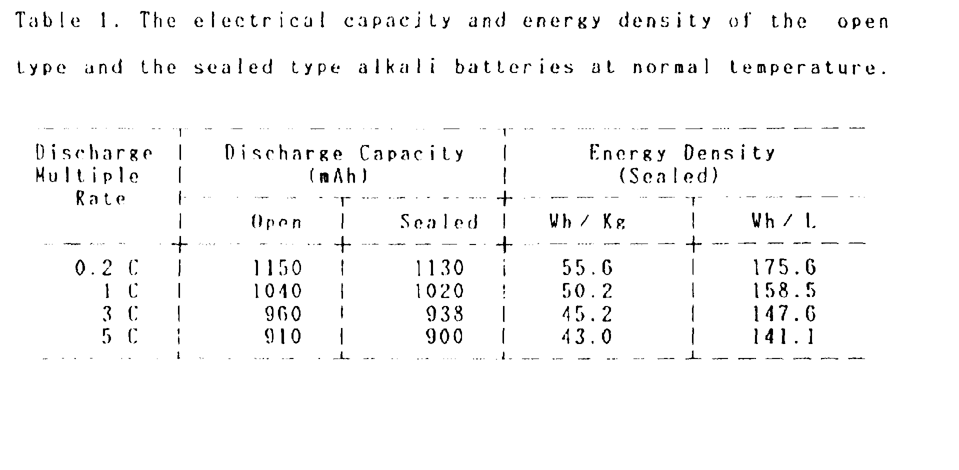

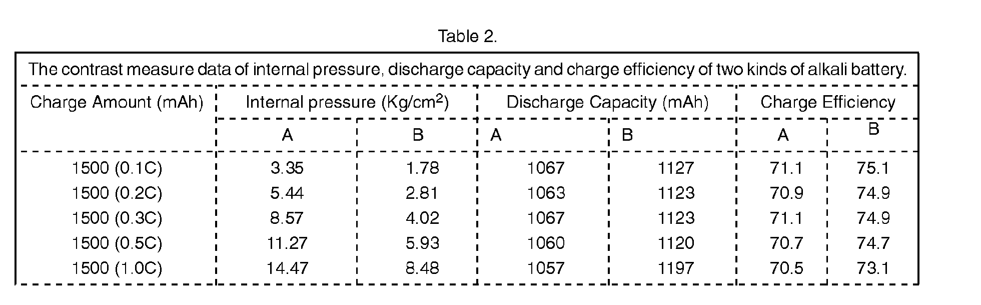

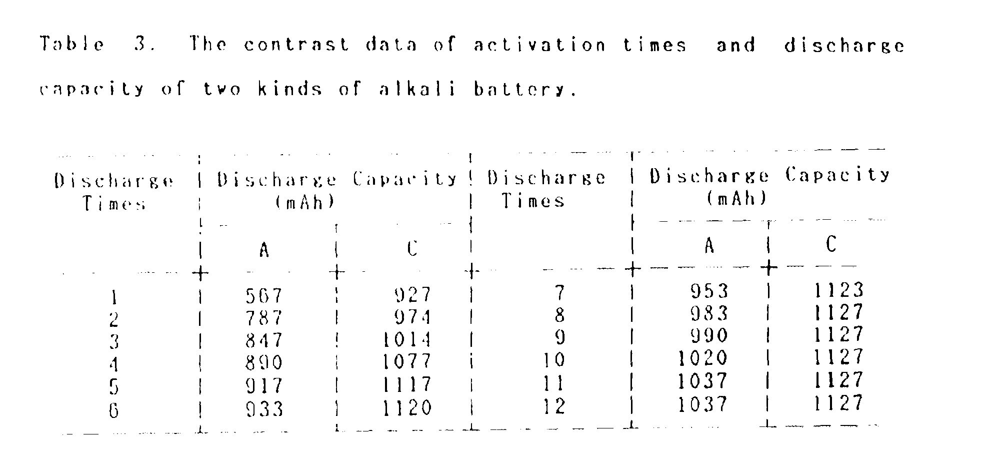

## Claims

1. A hydrogen storage alloy electrode, the active material of which comprises: first hydrogen storage alloy M₁ with a composition of 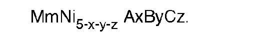 wherein Mm is a mischmetal, A=Co, Cr, V; B=Mn, Sn, Be; C=Al, Ca, Mg, Zr, Nb O≤c≤0.5, 0≤y≤1.5, 0≤z≤0.5; second hydrogen storage alloy M₂ with a composition of 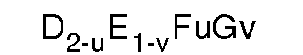 wherein D=Mg, Al; E=Cu, Zn; F=Ca, Be; G=Sn, Bi; 0≤u≤1 0<v<05;
both the first alloy M₁ and the second alloy M₂ being coated with a Ni, P based metallic compound before the two alloys are mixed.

2. The electrode according to Claim 1, wherein the weight proportion of M₁ and M₂ is 20:1~10:1.

3. The electrode according to claim 1, wherein the metallic compound is a Ni, P, J metallic compound in which J is an element selected from the group consisting of Cr, W, Co and Sn.

4. The electrode according to claim 3, wherein the atomic percentage of the Ni, P, J metallic compound is for Ni: 90 to 97%, for P: 1 to 7% and for J: 0 to 5%.

5. The electrode according to claim 1, wherein the metallic compound is a Ni, P metallic compound in which the atomic percentage of Ni is from 93 to 97% of the metallic compound, P is from 3 to 7%.

6. The electrode according to claim 1, wherein A-Cr, B-Be, C-Nb.

7. The electrode according to claim 6, wherein x=0.₄, y=₁.2, z=0.₄.

8. The electrode according to claim 1, wherein A=Co, B=Sn, C=Ca, and X=0.4, y=1.2, z=0.4.

9. The electrode according to claim 1, wherein D=Mg, E=Cu, F=Ca, G=Sn, and optionally u=0.5, v=0.5.

10. The electrode according to claim 1, wherein the thickness of coating is from 1 to 10 µm.

## Patentansprüche

1. Wasserstoffspeicherlegierungselektrode, deren aktives Material umfaßt:
eine erste Wasserstoffspeicherlegierung M₁ mit einer Zusammensetzung 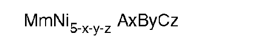 wobei Mm für ein Mischmetall steht, A=Co, Cr, V; B=Mn, Sn, Be; C=Al, Ca, Mg, Zr, Nb; 0 < x < 0,5, 0 < y < 1,5, 0 ≤ z < 0,5; eine zweite Wasserstoffspeicherlegierung M₂ mit einer Zusammensetzung 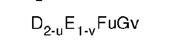 wobei D=Mg, Al; E=Cu, Zn; F=Ca, Be; G=Sn, Bi; 0 < u <1, 0 < v < 0,5; beide, die erste Legierung M₁ und die zweite Legierung M₂, sind beschichtet mit einer Ni, P basierten Metallverbindung, ehe die zwei Legierungen gemischt werden

2. Elektrode nach Anspruch 1, wobei das Gewichtsverhältnis von M₁ und M₂ ist 20:1~10:1.

3. Elektrode nach Anspruch 1, wobei die Metallverbindung eine Ni, P, J Metallverbindung ist, bei der J ein Element ist, ausgewählt aus der Gruppe, bestehend aus Cr, W, Co und Sn.

4. Elektrode nach Anspruch 3, wobei das Atomprozent der Ni, P, J Metallverbindung für Ni: 90 bis 97%, für P: 1 bis 7% und für J: 0 bis 5% ist.

5. Elektrode nach Anspruch 1, wobei die Metallverbindung eine Ni, P Metallverbindung ist, bei der das Ni-Atomprozent von 93 bis 97% der metallischen Verbindung ist, P von 3 bis 7% ist

6. Elektrode nach Anspruch 1, wobei A-Cr, B-Be, C-Nb.

7. Elektrode nach Anspruch 6, wobei x=0,₄, y=₁,2, z=0,₄.

8. Elektrode nach Anspruch 1, wobei A=Co, B=Sn, C=Ca und x=0,4, y=1,2, z=0,4.

9. Elektrode nach Anspruch 1, wobei D=Mg, E=Cu, F=Ca, G=Sn und wahlweise u=0,5, v=0,5.

10. Elektrode nach Anspruch 1, wobei die Dicke der Beschichtung von 1 bis 10 µm reicht.

## Revendications

1. Une électrode en alliage emmagasinant l'hydrogène dont le matériau actif comprend:
un premier alliage M1 emmagasinant l'hydrogène avec une formule de composition 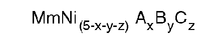
dans laquelle Mm est un métal d'alliage; A est en Co, Cr ou V; B est en Mn, Sn, ou Be; C est en Al, Ca, Mg; Zr ou Nb ; x est compris entre 0 et 0,5, y est compris entre 0 et 1,5, z est compris entre 0 et 0,5 ;
- un second alliage M2 emmagasinant l'hydrogène avec une formule de composition 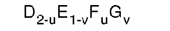 dans laquelle D est en Mg ou en Al; E est en Cu ou en Zn; F est en Ca ou en Be; G est en Sn ou en Bi; u est compris entre 0 et 1 et v est compris entre 0 et 0,5;
le premier alliage M1 et le second alliage M2 sont tous les deux recouverts avec un composé métallique à base de Ni et de P, avant que les deux alliages ne soient mélangés.

2. L'électrode selon la revendication 1, dans laquelle le poids en proportion de M1 et de M2 est de 20:1 ~ 10: 1.

3. L'électrode selon la revendication 1, dans laquelle le composé métallique est un composé métallique en Ni, en P et en J, dans lequel J est un élément sélectionné à partir du groupe constitué de Cr, W, Co et de Sn.

4. L'électrode selon la revendication 3, dans laquelle le pourcentage atomique du composé métallique en Ni, P et J est pour le Ni de 90 à 97%, pour le P de 1 à 7% et pour J de 0 à 5%.

5. L'électrode selon la revendication 1, dans laquelle le composé métallique est un composé métallique en Ni et en P, dans lequel le pourcentage atomique de Ni représente 93 à 97% du composé métallique, et P représente de 3 à 7%.

6. L'électrode selon la revendication 1, dans laquelle A est en Cr, B est en Be et C est en Nb.

7. L'électrode selon la revendication 6, dans laquelle x = 0,4, y = 1,2 et z = 0,4

8. L'électrode selon la revendication 1, dans laquelle A est en Co, B est en Sn, C est en Ca et x = 0,4, y = 1,2, et z = 0,4.

9. L'électrode selon la revendication 1, dans laquelle D est en Mg, E est en Cu, F est en Ca, G est en Sn et de manière optionnelle u = 0,5 et v = 0,5.

10. L'électrode selon la revendication 1, dans laquelle l'épaisseur du revêtement est de 1 à 10 µm.
